(19) Europäisches Patentamt / European Patent Office / Office européen des brevets

(11) **EP 4 076 883 B1**

(12) **EUROPEAN PATENT SPECIFICATION**

(45) Date of publication and mention of the grant of the patent:
**04.09.2024 Bulletin 2024/36**

(21) Application number: **20839389.2**

(22) Date of filing: **16.12.2020**

(51) International Patent Classification (IPC):
$B29B\ 7/40^{(2006.01)}$  $B29B\ 7/60^{(2006.01)}$
$B29B\ 7/84^{(2006.01)}$  $B29B\ 7/86^{(2006.01)}$
$B29B\ 7/90^{(2006.01)}$  $B29C\ 48/365^{(2019.01)}$
$B29C\ 48/50^{(2019.01)}$  $B29B\ 7/42^{(2006.01)}$
$B29B\ 7/48^{(2006.01)}$  $B29C\ 48/03^{(2019.01)}$
$B29C\ 48/76^{(2019.01)}$

(52) Cooperative Patent Classification (CPC):
**B29B 7/90; B29B 7/402; B29B 7/60; B29B 7/845; B29B 7/86; B29C 48/365; B29C 48/501;** B29B 7/428; B29B 7/488; B29C 48/03; B29C 48/765

(86) International application number:
**PCT/IB2020/062050**

(87) International publication number:
**WO 2021/124163 (24.06.2021 Gazette 2021/25)**

(54) **ASSEMBLY AND METHOD FOR PROCESSING VISCOUS MATERIAL**

VORRICHTUNG UND VERFAHREN ZUR VERARBEITUNG VON VISKOSEM MATERIAL

ENSEMBLE ET PROCÉDÉ DE TRAITEMENT DE MATÉRIAU VISQUEUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Validation States:
**MA**

(30) Priority: **16.12.2019 IT 201900024114**

(43) Date of publication of application:
**26.10.2022 Bulletin 2022/43**

(73) Proprietor: **Nexxus Channel S.r.L.**
**21036 Gemonio (VA) (IT)**

(72) Inventor: **PONZIELLI, Giuseppe**
**21033 Cittiglio (VA) (IT)**

(74) Representative: **Studio Torta S.p.A.**
**Via Viotti, 9**
**10121 Torino (IT)**

(56) References cited:
WO-A1-2019/049077    GB-A- 1 592 261
GB-A- 2 007 585    US-A- 4 227 816
US-A- 4 480 923    US-A- 4 606 646

• **TADMOR Z [US] ET AL: "A radical design that promises an extruder revolution - Part I", PLASTICS ENGINEERING,, vol. 35, no. 11, 1 November 1979 (1979-11-01), pages 20 - 25, XP001353177**

EP 4 076 883 B1

**Description**

TECHNICAL FIELD

The present invention relates to an assembly for processing viscous material, and to a related method.
In particular, the present invention is particularly suitable for processing substantially liquid viscous material.

BACKGROUND ART

In machines for processing viscous liquids in continuous mode, such as for example a screw extruder, it is particularly useful to "thin" the volume of the treated liquid, in order to transform it into an equivalent volume with a lower thickness and a greater surface extension.
In other words, in a volume having x, y, z coordinates, the thinning entails increasing the surface extension of the x-y or x-z or z-y planes respectively with respect to the z or y or x dimension.
The thinning described above is particularly useful in some applications such as, for example:

-    the incorporation of fillers in the form of fine powder;
-    degassing in the atmosphere or under vacuum for the elimination of volatile residues such as monomeric substances, solvents, water vapor, odours, etc.;
-    mixing of incompatible liquids;
-    molecular re-gradation (or molecular extension), for example for post-condensation polymers such as for example Polyethylene Terephthalate PET, Polyamide PA, Polycarbonate PC, etc.

In all the four examples cited above, it is very useful for the material to be transformed into a thin film, with a defined and constant thickness, for example ranging between 1 micron and 5000 microns. The lower the film thickness, the faster the above processes take place.
Documents GB 2007585 and US 4606646 describe machines for degassing viscous liquids. However, the solutions described in these documents have limitations in terms of efficiency and speed of the process.
Documents WO 2019/049077, GB 1592261 and US4227816 are also known, which describe machines for processing viscous material that are equipped with a material inlet from above and with an outlet spaced from the inlet by about 2/3 of circumference. Said machines do not achieve the desired incorporation effect and can be hardly combined with existing processors.

DISCLOSURE OF INVENTION

It is therefore an object of the present invention to provide an assembly for processing viscous material which is free from the drawbacks of the prior art.
In particular, it is an object of the present invention to provide an assembly for processing viscous material which is efficient and, at the same time, easy and economical to realise.
In accordance with these purposes, the present invention relates to an assembly for processing viscous material according to claim 1.
Thanks to the connection between the process duct and the pumping duct, at least a part of the viscous material is subjected to at least one passage in the pumping channel. This determines an increase in the interface surface and therefore an optimisation of the process to which the material is subjected.
It is also an object of the present invention to provide a method for processing viscous material as claimed in claim 13.

BRIEF DESCRIPTION OF THE DRAWINGS

Further characteristics and advantages of the present invention will become clear from the following description of an embodiment thereof, with reference to the figures of the attached drawings, in which:

-    Figure 1 is an exploded perspective schematic representation, with parts removed for clarity's sake, of the assembly for processing material according to the present invention;
-    Figure 2 is a schematic bottom view, with parts removed for clarity's sake, of a first detail of the assembly of Figure 1;
-    Figure 3 is a schematic sectional view along the plane III-III of the assembly of Figure 1;
-    Figure 4 is a schematic sectional view along the plane IV-IV indicated in Figure 1 of a second detail of the assembly of Figure 1;

- Figure 5 is a schematic sectional view along the plane V-V of the assembly of Figure 1;
- Figure 6 is a schematic sectional view, with parts removed for clarity's sake, of an assembly for processing viscous material in accordance with a variant of the present invention;
- Figure 7 is a schematic side view of a further variant of the assembly for processing viscous material according to the present invention;
- Figure 8 is a schematic sectional view, with parts removed for clarity's sake, of the assembly for processing viscous material according to the variant of Figure 6.

BEST MODE FOR CARRYING OUT THE INVENTION

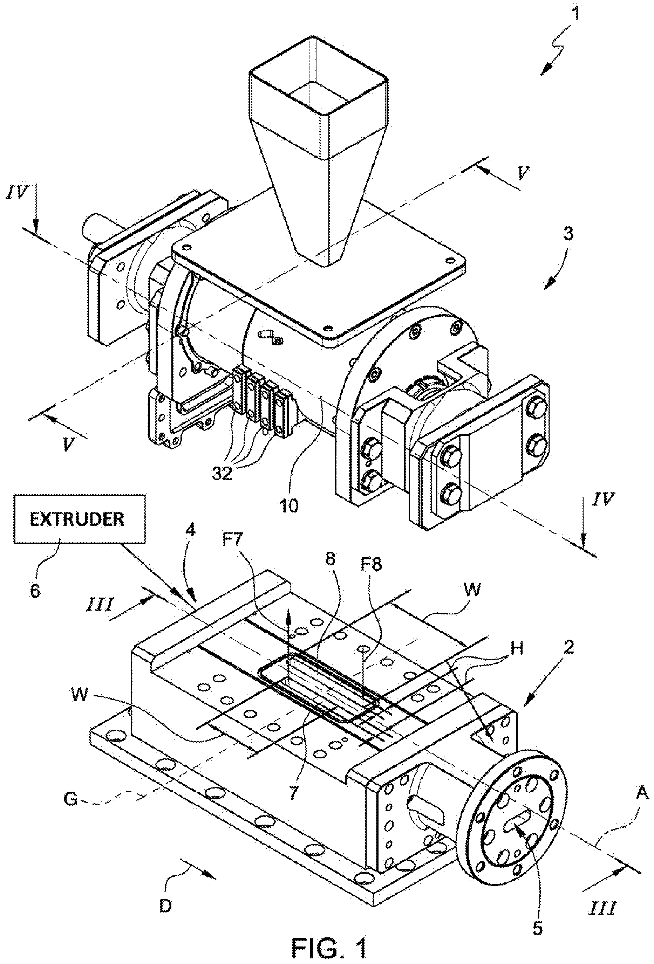

In Figure 1, the reference number 1 denotes an assembly for processing viscous material according to the present invention.

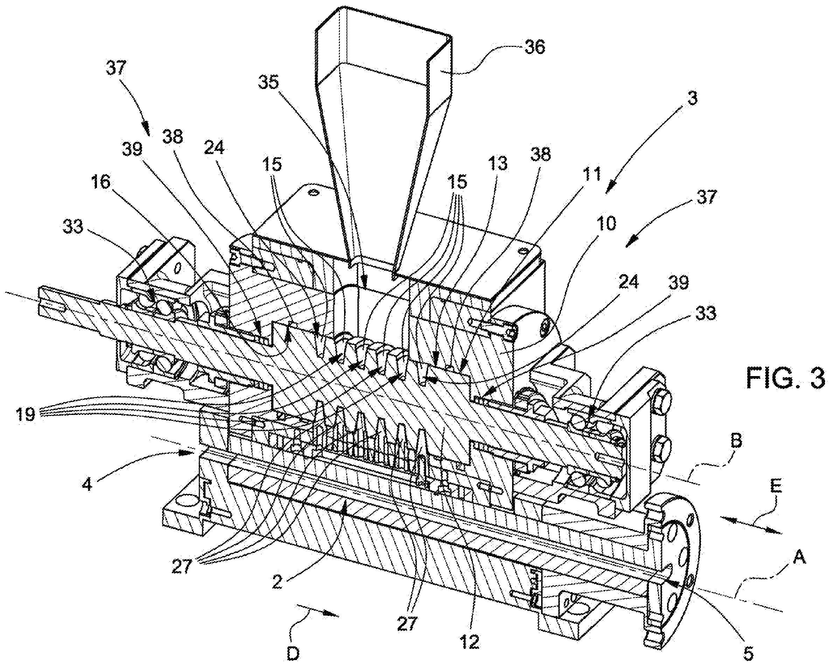

The assembly 1 comprises a process duct 2 and a pumping device 3, which, in use, are coupled together (see Figure 3) .

The process duct 2 (better visible in Figure 3) extends along a longitudinal axis A between an inlet 4 and an outlet 5.

In use, the process duct 2 is fed with viscous material, as we will see in detail below, for example from a screw extruder 6. In the process duct 2, the viscous material advances in one advancing direction D.

In the example described and shown herein, the process duct 2 has a substantially rectangular flow section.

Preferably, the section of the process duct 2 is constant.

It is understood that the process duct 2 may have a different section, for example circular or for example with a double lobe.

The process duct 2 has an opening 7 and an opening 8, through which the process duct 2 is in communication with the pumping device 3.

Preferably, the opening 7 and the opening 8 are arranged side by side. In the example described and shown herein, the opening 7 and the opening 8 are arranged the one next to the other along a direction orthogonal to the longitudinal axis A.

Preferably, the openings 7 and 8 are arranged so that the passage of material through them occurs along respective directions F7 and F8 substantially orthogonal to the flow direction D.

The opening 7 and the opening 8 have a width W, intended as the axial dimension, and a height H, intended as the dimension orthogonal to the width W.

Preferably, the opening 8 has a width W greater than the width W of the opening 7.

In the example described and shown herein, the assembly 1 comprises a screw extruder 6 (schematically represented in Figure 1) coupled to the process duct 2 to feed viscous material to the process duct 2.

The screw extruder 6 can be either single screw or twin screw (co-rotating or counter-rotating). The process duct 2 can be directly coupled to the extrusion cylinder of the screw extruder 6 or connected to the outlet from the screw extruder 6.

The material advancing in the process duct 2 is under pressure. Preferably, the material has a pressure higher than 0 and less than 80 bar in the process line 2. More preferably, the material pressure is higher than 0 and less than 10 bar and even more preferably higher than 0 and less than 2 bar.

In this way the passage of the material from the process duct 2 to the pumping device 9 is facilitated, as we will see in detail below.

If the material in the process duct 2 is under pressure, albeit light, the entry of the liquid into the pumping device 9 is in fact easier and more timely.

According to a variant not shown, the assembly 1 comprises an overpressure element arranged downstream of the process duct 2.The overpressure element can be a pump, typically a "melt" pump, or a flow restrictor.

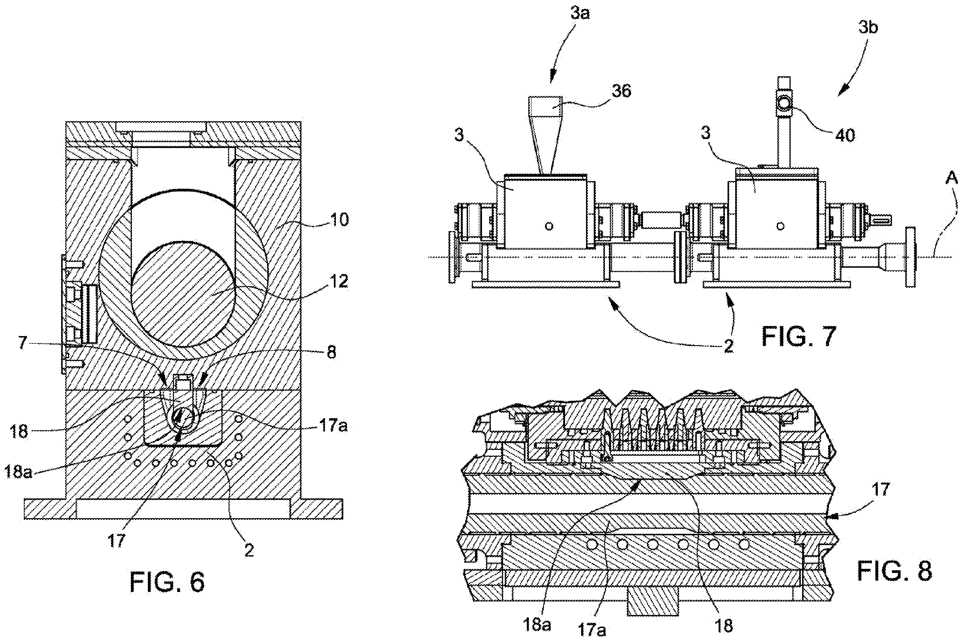

According to a variant shown in Figures 6 and 8, the process duct 2 houses at least one rotating extrusion screw 17 and provided with a core 17a.

In this case, the extrusion screw 17 has, in correspondence with the openings 7 and 8, a portion without thread in which only the smooth core 17a suitable for circumferential dragging (see in particular Figure 8) is present. Preferably, in the variant of Figures 6 and 8, the process duct 2 is equipped with a deviating element 18, which extends from the internal surface of the process duct 2 and is substantially arranged between the openings 7 and 8. The deviating element 18 has a face 18a arranged substantially facing the core 17a of the screw 17 and almost in contact with the core 17a so as to have sufficient clearance to allow the free rotation of the core 17a. In use, the deviating element 18 contributes to forcing the material circulating in the duct 2 to travel an obligatory path around the core 17a between the openings 7 and 8.

With reference to figures 1, 2 and 3, the pumping device 3 is equipped with a stator 10, comprising a cylindrical seat 11 (visible only in Figures 1 and 3), and with a cylindrical rotor 12 (visible only in Figures 1 and 3), which is housed in the cylindrical seat 11 and is coupled to the stator 10 with a sliding seal.

The rotor 12 is rotatable around an axis of rotation B substantially parallel to the longitudinal axis A and has an outer face 13 with at least one groove 15, which forms with the inner surface 16 of the cylindrical seat 11 of the stator 10 a respective pumping channel 19.

The outer face 13 of the rotor 12 and the inner cylindrical surface 16 of the stator 10 are concentric and facing each other and have respective radii of curvature so that the clearance between the rotor 12 and the stator 10 is reduced to a minimum within the tolerances that allow an easy rotation of the rotor 12 with respect to the stator 10.

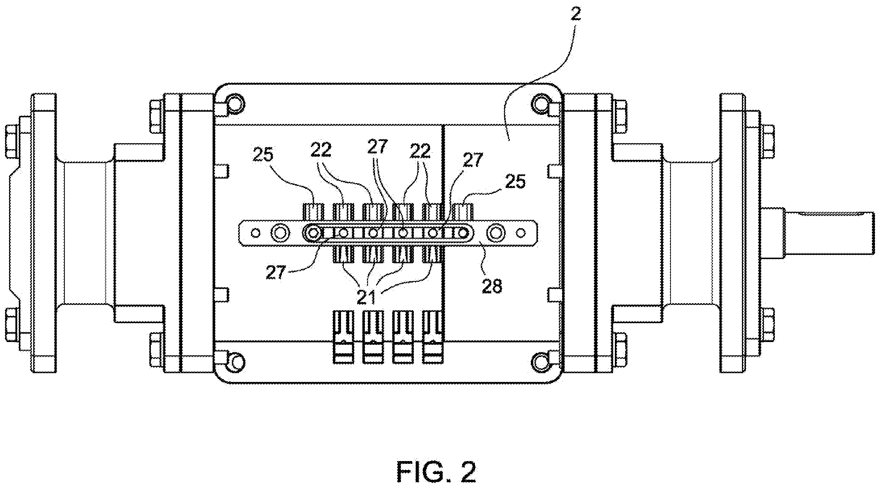

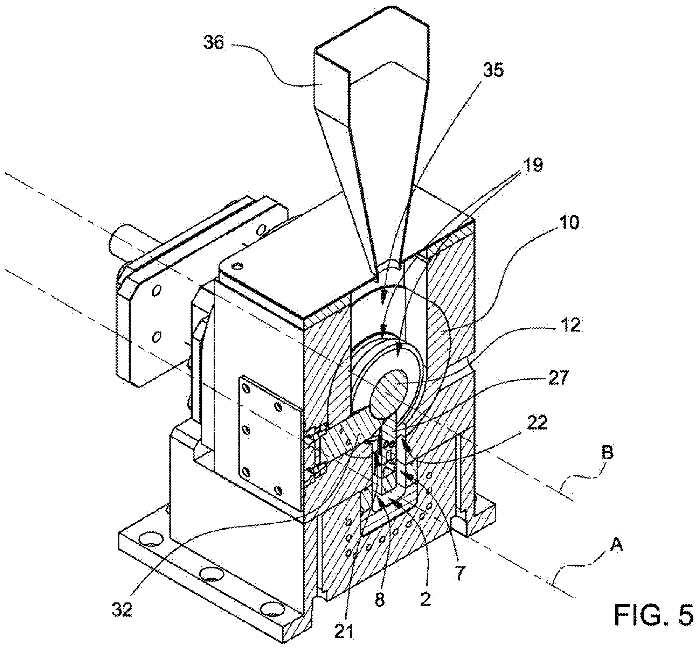

Each pumping channel 19 extends between at least one input 21 and at least one output 22 (better visible in Figures 2 and 5).

The input 21 and the output 22 are in fluid connection with the process duct 2. In other words, in use, the material advancing in the process duct 2 is fed to the pumping channel through the input 21 and is discharged in the process duct 2 through the output 22.

In the example described and shown herein, the input 21 is in connection with the opening 7, while the output 22 is connection with the opening 8.

Preferably, each groove 15 extends in a circumferential direction orthogonal to the axis of rotation B, so as to define respective substantially annular pumping channels 19.

In the example described and shown herein, the outer face has six grooves, 15, four of which contribute to forming respective pumping channels 19, while the remaining two are dedicated to forming respective purge channels 24.

In particular, the pumping channels 19 are arranged between the purge channels 24.

The purge channels 24 are dedicated to the eventual venting of the material which circulates in the pumping channels 19 adjacent thereto and which reaches the purge channels 24 through the clearance space between rotor 12 and stator 10.

The purge channels 24 are connected to the opening 8 but are not connected to the opening 7. In other words, each purge channel 24 is equipped with an outlet 25 (Figure 2) but is not equipped with an inlet in connection with the process duct 2. As already mentioned, in fact, the material enters the purge channels 24 through the clearance space between rotor 12 and stator 10.

Preferably, each pumping channel 19 is equipped with a scraper element 27 (Figure 5) arranged in the groove 15 substantially at the output 22.

The scraper element 27 preferably has a profile configured to creep into the groove 15 so as to detach the material from the external face 13 of the rotor 12 and facilitate the passage of the material present in the pumping channel 19 through the output 22.

The scraper elements 27 of the pumping channels 19 are supported by a frame 28 connected to the stator 10 (Figure 2).

Also each purge channel 24 is equipped with a scraper element 27 configured to creep into the groove 15 so as to detach the material from the external face 13 of the rotor 12 and facilitate the passage of the material present in the purge channel 24 through the outlet 25 of the purge channel 24.

In this way, all the material that accidentally ends up in the purge channels 24 is introduced back into circulation in the process duct 2.

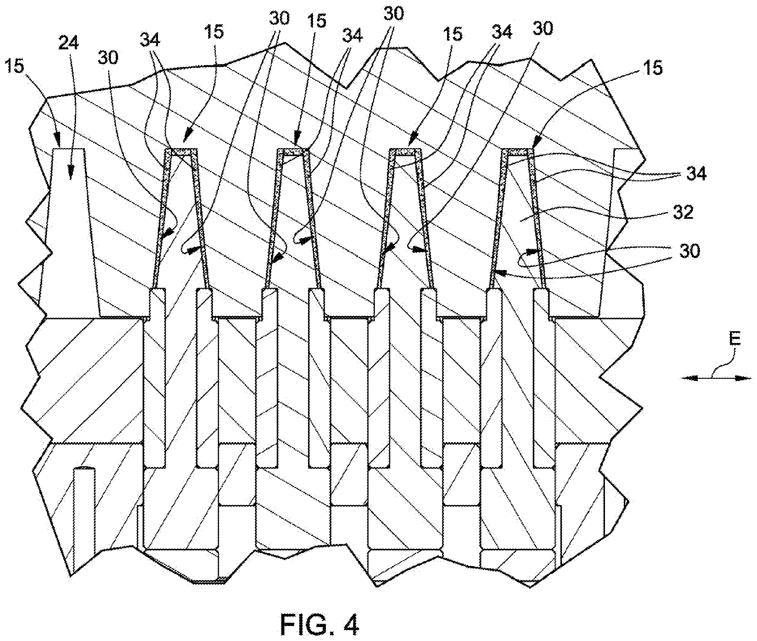

With reference to Figures 3 and 4, each groove 15 preferably has a diverging section towards the outside of the rotor 12. In other words, each groove 15 is equipped with diverging lateral faces 30 towards the outside of the rotor 12. It has been verified, in fact, that this geometry is more efficient than other geometries (for example rectangular) in favouring the pressurisation of the liquid material near the output 22.

However, it is understood that the groove 15 can also have a section of a different shape, such as for example rectangular or triangular, etc.

Preferably, at least one groove 15 houses at least a portion of a laminator element 32, which is fixed to the stator 10. The portion of the laminator element 32 that engages the groove 15 of the rotor 12 has a shape substantially complementary to the groove 15 so as to define, between the laminator element 32 and the groove 15 at least one gap 34.

In the example described herein, the shape of the laminator element 32 is such as to define two gaps 34, each of which is defined between the laminator element 32 and the walls 30 of the groove 15.

Preferably, the gaps 34 defined by the laminator element 32 are gradually converging towards along the direction of rotation (i.e. circumferentially) starting from the inlet up to the end of the laminator element 32. In this way, at the laminator element 32, the material flows are of the elongation type thanks to the convergence of the gaps 34 along the pumping duct 19.

Preferably, the laminator element 32 is arranged in the groove 15 just downstream of the input 21 of the pumping channel 19.

Preferably, the laminator element 32 extends inside the groove 15 for a circumferential stretch less than the total length of the pumping channel 19. More preferably, the laminator element 32 extends inside the groove 15 for a circumferential stretch less than 25% of the total length of the pumping channel 19.

In this way, the material entering through the input 21 meets the laminator element 32, which is dimensioned so as to create, thanks to the presence of the gaps 34, two separate flows of material along the walls 30 of the groove 15.

In other words, the laminator element 32 increases the interface surface of the material flowing in the pumping channel 19.

Downstream of the laminator element 32, the material flows are shear-free and, under particular process conditions, they can move at the same speed of rotation as the rotor 12 without being subjected to shear stress, until there is an accumulation and pressurisation of the material near the output 22 of the pumping duct 19.

The circumferential length of the portion of the pumping duct 19 in which the flow is typically of the shear-free type is preferably ranging between 50° and 260°.

With reference to Figures 1, 2 and 5, each laminator element 32 extends along a plane transversal to the axis of rotation B.

Preferably, the laminator element 32 moves in a direction of oscillation E substantially parallel to the axis of rotation B. This allows to keep the tolerances between laminator element 32 and walls 30 substantially unchanged. In this way, the thickness of the film of material that passes through the laminator element 32 also remains unchanged and consequently the cutting speed, the elongation, and the relative stresses.

When the rotor 12 is rotating, in fact, any axial displacements of the rotor 12, mostly due to phenomena of non-homogeneous thermal expansion with the stator 10, are automatically translated to the laminator elements 32, for example by means of spacers not shown and suitably arranged, leaving the design distance between the laminator elements 32 and the walls 30 of the pumping channels 19 substantially unchanged.

Basically, thanks to the possibility of oscillation of the laminator element 32, the thickness of the separated flows downstream of the laminator element 32 remains substantially unchanged throughout the entire duration of the process.

Preferably, each laminator element 32 can oscillate along the direction E independently of the other laminator elements 32.

According to a variant not shown, a plurality of laminator elements, arranged so as to subject the material to successive laminations, are housed inside a same groove. This can lead to an increase in the dispersive effect inside the pumping channel 19.

According to a further variant, not shown, the pumping channel 19 is without laminator elements. This solution is particularly suitable for applications where it is intended to discharge a reduced stress on the material to be treated, for example in the presence of fragile fibres in the material that circulates in the pumping channel 19, such as for example glass, carbon fibres, basalt, or natural fibres, etc.

A further variant envisages that the rotor comprises pumping channels equipped with laminator elements and pumping channels without laminator elements.

Preferably, the rotor 12 is supported by two bearings 33 at the ends and is suitable for being made to rotate at very high speeds, over 1000 RPM. This speed, in relation to the diameter of the rotor 12, ranging for example between 50 and 500 mm, is equivalent to peripheral speeds ranging between approximately 0.5 and 10 m/s.

The rotor 12 is preferably fixed to a speed reducer, in turn connected to a preferably electric motor, driven by a frequency converter in order to be able to vary the speed in the range allowed by the reducer and by the frequency that can be set in the frequency converter.

With reference to Figure 3, the stator 10 preferably has a through opening 35, which creates an aperture in at least one of the pumping channels 19.

In the example described and shown herein, the opening 35 has the function of allowing, depending on the application, the exit of gas-air or the entry of solid additives, such as fibre powders, etc.

In other words, the opening 35 creates a discontinuity of the inner surface 16 of the stator 10, creating an aperture in the pumping channel 19, for the functions described above.

As anticipated, depending on the applications the opening 35 can be exploited in different ways.

If the assembly 1 is used for the incorporation of fillers in the material (example case shown in the attached figures), the opening 35 is connected to a loading hopper 36 through which solid particles such as powder fillers, fibres, granules, etc. are fed.

If the assembly 1 is used to degas the material or to obtain a molecular re-gradation of the material, the opening 35 is connected to a vacuum pump (not shown for simplicity's sake in the attached figures).

If the assembly 1 is used for the introduction of liquid additives or for the introduction of gas into the material, the opening 35 is connected to a source for feeding some liquid or some gas to be mixed with the material circulating in the pumping duct 19.

If the assembly 1 is used to cool the material circulating in the pumping duct 19 (for example overheated by lamination), the opening 35 is engaged by a cooling element (not shown in the attached figures) in which pressurised water or other coolant such as ethylene glycol circulate.

The viscous materials that can be processed are all thermoplastic polymers, such as, for example Polypropylene, Polyethylene, Polyamide, Polystyrene, Acrylonitrile-Butadiene-Styrene, Polysulfone, Polyimide, Polyvinyl Chloride, Polyethylene Terephthalate, Polycarbonate etc.

Furthermore, food liquids such as chocolate, etc. can also be processed.

The solid additives that can be fed through the opening 35 into the material processed in the pumping channels 19, can be, for example, mineral powders, wood flour, powders of organic substances, solid or hollow glass spheres, calcium carbonate, talc, clays, carbon black, graphite etc., nano particles such as carbon nano tubes (CNT), graphene etc., organic and inorganic pigments, titanium dioxide and in general, powders characterized by dimensions ranging between 1 nm and 10,000.00 nm, and again glass fibres, carbon, basalt, natural fibres etc.

The gases that can be fed through the opening 35 into the material processed in the pumping channels 19 can be, for example, $CO_2$, Nitrogen, etc.

The gases that can be removed from the material processed in the pumping channels 19 are: monomeric or oligomeric residues, water vapor, reaction by-products such as oxygen, hydrogen, etc.

The products coming out of the process obtained with the apparatus of the invention can be compound in granules or finished products such as plates, tubes, profiles, films, yarns, etc.

According to a variant not shown in the attached figures, the assembly 1 can comprise at least one ON/OFF valve arranged so as to control the communication between the process duct 2 and the pumping device 3.

The assembly 1 according to the present invention is preferably equipped with a sealing system 37, which blocks the release of material at the sides of the rotor 12.

The sealing system 37 comprises the purge channels 24 already described, which receive any material released from the pumping channels 19 adjacent thereto and discharge it directly into the process duct 2.

Preferably, the sealing system 37 also comprises a viscous seal 38 defined by two grooves of the stator 10, preferably coil shaped, which are axially arranged respectively between the respective purge channel 24 and the respective bearing 33 of the rotor 12.

Preferably, the sealing system 37 also comprises two static seals 39, preferably packings, which are respectively arranged between the respective viscous seal 38 and the respective bearing 33 of the rotor 12.

According to a variant shown in Figure 7, various pumping devices 3 configured for different applications are coupled in series to the process duct 2. In other words, the process duct 2 is equipped with a plurality of pairs of openings (not visible in Figure 7) to which a plurality of pumping devices 3 are respectively connected.

Each pumping device 3 is arranged to carry out a specific processing. For example, a first pumping device 3a comprises the hopper 36 to carry out the introduction of powders and a second pumping device 3b comprises a vacuum pump 40 to carry out a degassing. In this way, moreover, each pumping device 3 can have more convenient dimensions and a reduced distance between the bearings. This allows to avoid bending the rotor during the process. Moreover, in this way the areas of the pumping device which operate under vacuum conditions are separated from the areas which do not operate under vacuum conditions.

With reference to Figure 3, in use, the material fed to the process duct 2, is subjected to one or more passages through the pumping channels 19 and, after each passage, is cyclically discharged in the process duct 2.

The number of passages of a particle of material inside the pumping channel 19 is given with a good approximation by the ratio between the recirculation flow rate and the axial flow rate (Qrec/Qax).

Wherein axial flow means the flow rate fed to the process duct 2, arriving from a material pumping apparatus (for example a screw extruder 6) and recirculation flow rate means the flow rate of material that circulates in all pumping channels 19 (value depending on various variables such as geometric and operational ones such as the passage section of the pumping channel, the depth of the pumping channel, the axial distance between the walls of the pumping channel, the thickness of the material downstream of the laminator element 32 and the speed of the rotor 12).

Since the place where the processes of dispersion and surface exposure of the material take place is the pumping channel 19, it is clear that the number of passages of the material through the pumping channels 19 identifies the number of treatments to which all the material is subjected.

It is evident that a ratio Qrec/Qax < 1 implies that not all the liquid has passed once through the pumping channels 19, whereas Qrec/Qax = 1 implies that there has been a single passage of all the material through the pumping channels 19 and finally Qrec/Qax > 1 implies that all the liquid has passed more than once through the pumping channels 19.

In greater detail, the recirculation flow rate $Q_{rec}$ is substantially equivalent to the volume of the material stowed in the pumping channel 19 multiplied by the rotation speed of the rotor 12 and by the number N of the pumping channels 19.

In the particular example described and shown herein, in which the pumping channel 19 is equipped with at least one laminator element 32, the flow rate Qrec can be summarized by the following expression:

$$Qrec = (R^2 - r^2) \cdot \pi \cdot N \cdot d_{melt} \cdot 2 \cdot \omega$$

where:

R = external radius of the pumping channel 19
r = internal pumping radius 19
N = number of pumping channels 19
$d_{melt}$ = thickness of the layer of material downstream of the laminator element 32
$\omega$ = rotation speed of the rotor 12 (in revolutions per second)

It is known that in the processes to which the invention typically applies it is often useful to design several passages of the same material through the pumping channel 19.

In case of use of the assembly 1 according to the present invention for degassing purposes of the material, studies have shown that more than one degassing passage may be necessary for an optimal degassing. It is understood that the number of optimal passages can vary according to the applications of the assembly according to the present invention.

However, it is important to underline that, thanks to the flexibility of the present solution, it is possible to set the operation of the assembly 1 so as to obtain a desired number of passages inside the pumping device 19 in order to optimise the process for which the assembly 1 is employed.

Advantageously, the assembly and the method according to the present invention is particularly useful for producing compounds of thermoplastic material, in the form of granules or of films, sheets, plates, profiles, tubes, yarns, etc., with either compact or expanded structure.

At this point, the advantages brought by the present invention are also evident with respect to the solutions disclosed by patents GB 2007585, US 4606646, WO 2019/049077, GB 1592261 and US4227816. The fact of having put an axial flow channel (2, 17) in communication with the circumferential pumping channels, each having an independent flow rate, makes it possible for the whole liquid material to pass repeatedly one or more times through the pumping channels 19 as function of the Qrec/Qax ratio. This is simply not possible with the patents mentioned.

**Claims**

1. Assembly for processing viscous material comprising:

   • a process duct (2) extending along a longitudinal axis (A) between an inlet (4) and an outlet (5); in use, the process duct (2) being fed with viscous material, for example coming from a screw extruder (6); wherein, in use, the viscous material advances in the process duct (2) in one advancing direction (D);
   • at least one pumping device (3) provided with:

      - a stator (10) comprising a cylindrical seat (11);
      - at least one cylindrical rotor (12), which is housed in the stator (10) and is coupled to the stator (10) with a sliding seal; wherein the rotor (12) is configured to rotate around a rotating axis (B) substantially parallel to the longitudinal axis (A) and has an outer face (13) with at least one groove (15), which forms with the inner surface (16) of the stator (10) at least one pumping channel (19);

   wherein the pumping device (3) is configured so that the pumping channel (19) extends between at least one input (21) and at least one output (22); the input (21) and the output (22) being in fluid connection with the process duct (2), so that, in use, the viscous material advancing in the process duct (2) is fed to the pumping channel (19) through the input (21) and is discharged in the process duct (2) through the output (22);

   **characterized in that**

   the process duct (2) has a first opening (7) in connection with the input (21) of the pumping channel (19) and a second opening (8) in connection with the output (22) of the pumping channel (19); and **in that** the input (21) and the output (22) of the pumping channel (19) are substantially arranged side by side along a direction orthogonal to the axis of rotation (B) .

2. Assembly according to claim 1, wherein the pumping channel (19) extends in a circumferential direction orthogonal to the axis of rotation (B) .

3. Assembly according to anyone of the previous claims, wherein the pumping device (3) comprises at least one

7

laminator element (32), which is fixed to the stator (10) and is configured to engage, at least in part, the groove (15) of the rotor (12).

4. Assembly according to claim 3, wherein the portion of the laminator element (32) that engages the groove (15) of the rotor (12) has a shape substantially complementary to the groove (15) of the rotor (12) so as to define, between the laminator element (32) and the groove (15) at least one gap (34).

5. Assembly according to claim 3 or 4, wherein the laminator element (32) extends along a plane transversal to the axis of rotation (B).

6. Assembly according to anyone of the claims from 3 to 5, wherein the laminator element (32) is configured to move in a direction of oscillation (E) substantially parallel to the axis of rotation (B).

7. Assembly according to anyone of the previous claims, wherein the pumping device (3) comprises a scraper element (27) arranged in the groove (15) substantially at the output (22); the scraper element (27) having a profile configured to creep into the at least one groove (15) so as to detach the material from the external face (13) of the rotor (12) and facilitate the passage of the material present in the pumping channel (19) through the output (22).

8. Assembly according to anyone of the previous claims, wherein at least one groove (15) of the outer face (13) of the rotor (12) has a rectangular section or a diverging section towards the outside of the rotor (12).

9. Assembly according to anyone of the previous claims, wherein, in use, the material advancing in the process duct (2) has a pressure greater than 0 and less than 80 bar.

10. Assembly according to anyone of the previous claims, comprising at least one rotating extrusion screw, which is housed in the process duct (2).

11. Assembly according to claim 10, wherein the extrusion screw (17) has, in correspondence with the first opening (7) and the second opening (8), a portion without thread; the process duct (2) being equipped with a deviating element (18), which extends from the internal surface of the process duct (2) and is substantially arranged between the first opening (7) and the second opening (8).

12. Assembly according to anyone of the previous claims, comprising at least one ON/OFF valve arranged so as to control the communication between the process duct (2) and the pumping device (3).

13. Method for processing viscous material using the assembly as claimed in anyone of the previous claims comprising:

• feeding viscous material in one advancing direction (D) to a process duct (2) extending along a longitudinal axis (A) between an inlet (4) and an outlet (5);
• fluidly connecting a pumping device (3) with the process duct (2); wherein the pumping device (3) is equipped with:

- a stator (10) comprising a cylindrical seat (11); at least one cylindrical rotor (12), which is housed in the stator (10) and is coupled to the stator (10) with a sliding seal; wherein the rotor (12) is configured to rotate around a rotating axis (B) substantially parallel to the longitudinal axis (A) and has an outer face (13) with at least one groove (15), which forms with the inner surface (16) of the stator (10) a pumping channel (19); the pumping device (3) being configured so that the pumping channel (19) extends between at least one input(21) and at least one output (22); the input (21) and output (22) being in fluid connection with the process duct (2); so that, in use, the viscous material advancing in the process duct (2) is fed to the pumping channel (19) through the input (21) and is discharged in the process duct (2) through the output (22); **characterized in that** the process duct (2) has a first opening (7) in connection with the input (21) of the pumping channel (19) and a second opening (8) in connection with the output (22) of the pumping channel (19);
and **in that** the input (21) and the output (22) of the pumping channel (19) are substantially arranged side by side along a direction orthogonal to the axis of rotation (B).

**Patentansprüche**

1. Anordnung zum Verarbeiten von viskosem Material, umfassend:

   • einen Prozesskanal (2), der sich entlang einer Längsachse (A) zwischen einem Einlass (4) und einem Auslass (5) erstreckt; wobei dem Prozesskanal (2) in Gebrauch viskoses Material zugeführt wird, das beispielsweise von einem Schneckenextruder (6) kommt; wobei das viskose Material in Gebrauch im Prozesskanal (2) in einer Vorschubrichtung (D) nach vorn bewegt wird;
   • zumindest eine Pumpvorrichtung (3), die bereitgestellt ist mit:

      - einem Stator (10), umfassend einen zylindrischen Sitz (11) ;
      - zumindest einem zylindrischen Rotor (12), der im Stator (10) untergebracht und mit dem Stator (10) über eine Gleitdichtung gekoppelt ist; wobei der Rotor (12) derart konfiguriert ist, dass er sich um eine Drehachse (B) dreht, die zur Längsachse (A) im Wesentlichen parallel verläuft, und eine Außenseite (13) mit zumindest einer Nut (15) aufweist, die mit der Innenfläche (16) des Stators (10) zumindest einen Pumpkanal (19) ausbildet;
      wobei die Pumpvorrichtung (3) derart konfiguriert ist, dass sich der Pumpkanal (19) zwischen zumindest einem Eingang (21) und zumindest einem Ausgang (22) erstreckt; wobei der Eingang (21) und der Ausgang (22) in Fluidverbindung mit dem Prozesskanal (2) stehen, so dass in Gebrauch das viskose Material, das in dem Prozesskanal (2) nach vorn bewegt wird, dem Pumpkanal (19) über den Eingang (21) zugeführt wird und in dem Prozesskanal (2) über den Ausgang (22) ausgeleitet wird;
      **dadurch gekennzeichnet, dass**
      der Prozesskanal (2) eine erste Öffnung (7) in Verbindung mit dem Eingang (21) des Pumpkanals (19) und eine zweite Öffnung (8) in Verbindung mit dem Ausgang (22) des Pumpkanals (19) aufweist; und dass der Eingang (21) und der Ausgang (22) des Pumpkanals (19) im Wesentlichen nebeneinander entlang einer Richtung orthogonal zur Drehachse (B) angeordnet sind.

2. Anordnung nach Anspruch 1, wobei sich der Pumpkanal (19) in einer Umfangsrichtung orthogonal zur Drehachse (B) erstreckt.

3. Anordnung nach einem der vorhergehenden Ansprüche, wobei die Pumpvorrichtung (3) zumindest ein Laminierelement (32) umfasst, das am Stator (10) fixiert und derart konfiguriert ist, dass es zumindest teilweise in die Nut (15) des Rotors (12) eingreift.

4. Anordnung nach Anspruch 3, wobei der Abschnitt des Laminierelements (32), der in die Nut (15) des Rotors (12) eingreift, eine Form aufweist, die im Wesentlichen komplementär zu der Nut (15) des Rotors (12) ist, um zwischen dem Laminierelement (32) und der Nut (15) zumindest einen Spalt (34) zu definieren.

5. Anordnung nach Anspruch 3 oder 4, wobei sich das Laminierelement (32) entlang einer Ebene quer zur Drehachse (B) erstreckt.

6. Anordnung nach einem der Ansprüche 3 bis 5, wobei das Laminierelement (32) derart konfiguriert ist, dass es sich in einer Schwingungsrichtung (E) bewegt, die zur Drehachse (B) im Wesentlichen parallel verläuft.

7. Anordnung nach einem der vorhergehenden Ansprüche, wobei die Pumpvorrichtung (3) ein Abstreifelement (27) umfasst, das in der Nut (15) im Wesentlichen am Ausgang (22) angeordnet ist; wobei das Abstreifelement (27) ein Profil aufweist, das derart konfiguriert ist, dass es in die zumindest eine Nut (15) eindringt, um das Material von der Außenseite (13) des Rotors (12) zu lösen und den Durchgang des Materials zu erleichtern, das sich im Pumpkanal (19) über den Ausgang (22) befindet.

8. Anordnung nach einem der vorhergehenden Ansprüche, wobei zumindest eine Nut (15) der Außenseite (13) des Rotors (12) einen rechteckigen Querschnitt oder einen zur Außenseite des Rotors (12) divergierenden Querschnitt aufweist.

9. Anordnung nach einem der vorhergehenden Ansprüche, wobei, in Gebrauch, das Material, das in dem Prozesskanal (2) nach vorn bewegt wird, einen Druck von mehr als 0 und weniger als 80 bar aufweist.

10. Anordnung nach einem der vorhergehenden Ansprüche, umfassend zumindest eine rotierende Extruderschnecke, die in dem Prozesskanal (2) untergebracht ist.

11. Anordnung nach Anspruch 10, wobei die Extruderschnecke (17) in Übereinstimmung mit der ersten Öffnung (7) und der zweiten Öffnung (8) einen Abschnitt ohne Gewinde aufweist; wobei der Prozesskanal (2) mit einem Umlenkelement (18) ausgestattet ist, das sich von der Innenfläche des Prozesskanals (2) erstreckt und im Wesentlichen zwischen der ersten Öffnung (7) und der zweiten Öffnung (8) angeordnet ist.

12. Anordnung nach einem der vorhergehenden Ansprüche, umfassend zumindest ein EIN/AUS-Ventil, das so angeordnet ist, dass es die Verbindung zwischen dem Prozesskanal (2) und der Pumpvorrichtung (3) steuert.

13. Verfahren zum Verarbeiten von viskosem Material unter Verwendung der Anordnung nach einem der vorhergehenden Ansprüche, umfassend:

• Zuführen von viskosem Material in einer Vorschubrichtung (D) zu einem Prozesskanal (2), der sich entlang einer Längsachse (A) zwischen einem Einlass (4) und einem Auslass (5) erstreckt;
• Fluidverbinden einer Pumpvorrichtung (3) mit dem Prozesskanal (2); wobei die Pumpvorrichtung (3) ausgestattet ist mit:

- einem Stator (10), umfassend einen zylindrischen Sitz (11); zumindest einen zylindrischen Rotor (12), der im Stator (10) untergebracht und mit dem Stator (10) über eine Gleitdichtung gekoppelt ist; wobei der Rotor (12) derart konfiguriert ist, dass er sich um eine Drehachse (B) dreht, die zur Längsachse (A) im Wesentlichen parallel verläuft, und eine Außenseite (13) mit zumindest einer Nut (15) aufweist, die mit der Innenfläche (16) des Stators (10) einen Pumpkanal (19) ausbildet; wobei die Pumpvorrichtung (3) derart konfiguriert ist, dass sich der Pumpkanal (19) zwischen zumindest einem Eingang (21) und zumindest einem Ausgang (22) erstreckt; wobei der Eingang (21) und der Ausgang (22) in Fluidverbindung mit dem Prozesskanal (2) stehen, so dass in Gebrauch das viskose Material, das in dem Prozesskanal (2) nach vorn bewegt wird, dem Pumpkanal (19) über den Eingang (21) zugeführt wird und in dem Prozesskanal (2) über den Ausgang (22) ausgeleitet wird;

**dadurch gekennzeichnet, dass**

der Prozesskanal (2) eine erste Öffnung (7) in Verbindung mit dem Eingang (21) des Pumpkanals (19) und eine zweite Öffnung (8) in Verbindung mit dem Ausgang (22) des Pumpkanals (19) aufweist; und dass der Eingang (21) und der Ausgang (22) des Pumpkanals (19) im Wesentlichen nebeneinander entlang einer Richtung orthogonal zur Drehachse (B) angeordnet sind.

**Revendications**

1. Ensemble pour le traitement de matières visqueuses comprenant :

• un conduit de traitement (2) s'étendant le long d'un axe longitudinal (A) entre une entrée (4) et une sortie (5) ; en cours d'utilisation, le conduit de traitement (2) étant alimenté en matière visqueuse, provenant par exemple d'une extrudeuse à vis (6) ; dans lequel, en cours d'utilisation, la matière visqueuse avance dans le conduit de traitement (2) dans une direction d'avancement (D) ;
• au moins un dispositif de pompage (3) pourvu de :

- un stator (10) comprenant un siège cylindrique (11) ;
- au moins un rotor cylindrique (12), qui est logé dans le stator (10) et couplé au stator (10) avec un joint coulissant ; dans lequel le rotor (12) est configuré pour tourner autour d'un axe de rotation (B) sensiblement parallèle à l'axe longitudinal (A) et présente une face extérieure (13) avec au moins une rainure (15), qui forme avec la surface intérieure (16) du stator (10) au moins un canal de pompage (19) ; dans lequel le dispositif de pompage (3) est configuré de manière à ce que le canal de pompage (19) s'étende entre au moins une entrée (21) et au moins une sortie (22) ; l'entrée (21) et la sortie (22) étant en liaison fluidique avec le conduit de traitement (2), de sorte que, en cours d'utilisation, la matière visqueuse avançant dans le conduit de traitement (2) est acheminée vers le canal de pompage (19) par l'entrée (21) et est évacuée dans le conduit de traitement (2) par la sortie (22) ; **caractérisé en ce que** le conduit de traitement (2) a une première ouverture (7) en connexion avec l'entrée (21) du canal de pompage (19) et une seconde ouverture (8) en connexion avec la sortie (22) du canal de pompage (19) ; et **en ce que**

l'entrée (21) et la sortie (22) du canal de pompage (19) sont sensiblement disposées côte à côte le long d'une direction orthogonale à l'axe de rotation (B).

2. Ensemble selon la revendication 1, dans lequel le canal de pompage (19) s'étend dans une direction circonférentielle orthogonale à l'axe de rotation (B).

3. Ensemble selon l'une quelconque des revendications précédentes, dans lequel le dispositif de pompage (3) comprend au moins un élément de laminage (32), qui est fixé au stator (10) et est configuré pour s'engager, au moins en partie, dans la rainure (15) du rotor (12).

4. Ensemble selon la revendication 3, dans lequel la portion de l'élément de laminage (32) qui s'engage dans la rainure (15) du rotor (12) a une forme sensiblement complémentaire de la rainure (15) du rotor (12) de manière à définir, entre l'élément de laminage (32) et la rainure (15), au moins un espace (34).

5. Ensemble selon la revendication 3 ou 4, dans lequel l'élément de laminage (32) s'étend le long d'un plan transversal à l'axe de rotation (B).

6. Ensemble selon l'une quelconque des revendications de 3 à 5, dans lequel l'élément de laminage (32) est configuré pour se déplacer dans une direction d'oscillation (E) sensiblement parallèle à l'axe de rotation (B).

7. Ensemble selon l'une quelconque des revendications précédentes, dans lequel le dispositif de pompage (3) comprend un élément racleur (27) disposé dans la rainure (15) sensiblement au niveau de la sortie (22) ; l'élément racleur (27) ayant un profil configuré pour se faufiler dans l'au moins une rainure (15) de manière à détacher la matière de la face extérieure (13) du rotor (12) et à faciliter le passage de la matière présente dans le canal de pompage (19) au travers de la sortie (22).

8. Ensemble selon l'une quelconque des revendications précédentes, dans lequel au moins une rainure (15) de la face extérieure (13) du rotor (12) présente une section rectangulaire ou une section divergente vers l'extérieur du rotor (12).

9. Ensemble selon l'une quelconque des revendications précédentes, dans lequel, en cours d'utilisation, la matière qui avance dans le conduit de traitement (2) a une pression supérieure à 0 et inférieure à 80 bar.

10. Ensemble selon l'une quelconque des revendications précédentes, comprenant au moins une vis d'extrusion rotative, qui est logée dans le conduit de traitement (2).

11. Ensemble selon la revendication 10, dans lequel la vis d'extrusion (17) présente, en correspondance avec la première ouverture (7) et la seconde ouverture (8), une portion non filetée ; le conduit de traitement (2) étant équipé d'un élément de déviation (18), qui s'étend à partir de la surface intérieure du conduit de traitement (2) et est sensiblement disposé entre la première ouverture (7) et la seconde ouverture (8).

12. Ensemble selon l'une quelconque des revendications précédentes, comprenant au moins une vanne ON/OFF disposée de manière à contrôler la communication entre le conduit de traitement (2) et le dispositif de pompage (3).

13. Procédé de traitement d'une matière visqueuse utilisant l'ensemble tel que revendiqué dans l'une quelconque des revendications précédentes comprenant :

   • alimenter en matière visqueuse, dans une direction d'avancement (D), un conduit de traitement (2) s'étendant le long d'un axe longitudinal (A) entre une entrée (4) et une sortie (5) ;
   • relier fluidiquement un dispositif de pompage (3) avec le conduit de traitement (2) ; dans lequel le dispositif de pompage (3) est équipé de :

      - un stator (10) comprenant un siège cylindrique (11) ; au moins un rotor cylindrique (12), qui est logé dans le stator (10) et couplé au stator (10) avec un joint coulissant ; dans lequel le rotor (12) est configuré pour tourner autour d'un axe de rotation (B) sensiblement parallèle à l'axe longitudinal (A) et présente une face extérieure (13) avec au moins une rainure (15), qui forme avec la surface intérieure (16) du stator (10) un canal de pompage (19) ; le dispositif de pompage (3) étant configuré de sorte que le canal de pompage (19) s'étende entre au moins une entrée (21) et au moins une sortie (22) ; l'entrée (21) et la sortie (22) étant en liaison fluidique avec le conduit de traitement (2) ; de sorte que, en cours d'utilisation, la matière visqueuse avançant dans le conduit de traitement (2) est acheminée vers le canal de pompage (19) par l'entrée (21) et est évacuée dans le conduit de traitement (2) par la sortie (22) ; **caractérisé en ce que** le conduit de traitement (2) a une première ouverture (7) en connexion avec l'entrée (21) du canal de pompage (19) et une seconde ouverture (8) en connexion avec la sortie (22) du canal de pompage (19) ; et **en ce que**

l'entrée (21) et la sortie (22) du canal de pompage (19) sont sensiblement disposées côte à côte le long d'une direction orthogonale à l'axe de rotation (B).

FIG. 1

FIG. 2

FIG. 3

FIG. 4

FIG. 5

EP 4 076 883 B1

FIG. 6

FIG. 7

FIG. 8

EP 4 076 883 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2007585 A
- US 4606646 A
- WO 2019049077 A
- GB 1592261 A
- US 4227816 A